# EUROPÄISCHE PATENTANMELDUNG

(11) **EP 4 296 231 A1**
(43) Veröffentlichungstag der Anmeldung: **27.12.2023**
(21) Anmeldenummer: 22179873.9
(22) Anmeldetag: 20.06.2022
(51) Int. Cl.: C01D 3/08, C04B 7/43, F27D 17/00

(54) **VERFAHREN ZUR BEHANDLUNG VON SALZHALTIGEN STÄUBEN**

(71) Anmelder: amaTEQ Holding GmbH, 48143 Münster (DE)
(72) Erfinder: Kehrmann, Alexander, 48149 Münster (DE); Edelkott, Detlef, 89584 Ehingen (DE)
(74) Vertreter: Hoffmann Eitle

(57) **Zusammenfassung**

Die vorliegende Erfindung betrifft ein Verfahren zur Behandlung von salzhaltigen Stäuben, die beim Betrieb industrieller Anlagen, z.B. in Müllverbrennungsanlagen oder beim Betrieb von Drehrohröfen, z.B. in Zementherstellungsanlagen oder Klinkerherstellungsanlagen, anfallen. Das Verfahren umfasst einen Schritt a) der Bildung einer wässrigen Lösung durch In-Kontakt-Bringen von salzhaltigen Stäuben mit einer wässrigen Phase; einen Schritt b) der Entfernung von Schwermetallen aus der wässrigen Lösung; und einen Schritt c) der Abtrennung von Alkalimetallchloriden aus der wässrigen Lösung; und das In-Kontakt-Bringen von salzhaltigen Stäuben mit einer wässrigen Phase in Schritt a) mittels einer mehrstufigen Anordnung, die von den salzhaltigen Stäuben und der wässrigen Phase in entgegengesetzter Richtung durchlaufen wird, erreicht wird.

## Beschreibung

### Technisches Gebiet

Die vorliegende Erfindung betrifft ein Verfahren zur Behandlung von salzhaltigen Stäuben, die beim Betrieb industrieller Anlagen, z.B. in Müllverbrennungsanlagen oder beim Betrieb von Drehrohröfen, z.B. in Zementherstellungsanlagen oder Klinkerherstellungsanlagen, anfallen.

### Hintergrund

Bei dem Betrieb von industriellen Anlagen, fallen oftmals große Mengen an salzhaltigen Stäuben, deren Verwertung angesichts vorhersehbarer Rohstoffknappheit und zunehmender Nachhaltigkeitsbestrebungen eine immer größer werdende Beachtung findet. Selbst wenn eine Deponierung dieser Stoffe in Betracht gezogen wird, kann ihre Zusammensetzung großen Einfluss auf die damit verbundenen Kosten haben.

### Aufgabe und Ziele der Erfindung

Vor dem genannten Hintergrund war es den Erfindern ein Anliegen, ein Verfahren zu entwickeln, mittels dessen sich Rohstoffe aus salzhaltigen Stäuben zurückgewinnen lassen. Mit diesem Verfahren soll eine möglichst hohe Menge an Material in den Wirtschaftskreislauf zurückgeführt werden. Zugleich soll das zurückgewonnene Material durch das Verfahren eine Aufwertung erfahren, indem es in möglichst hoher Reinheit bereitgestellt werden kann.

### Beschreibung der Abbildungen

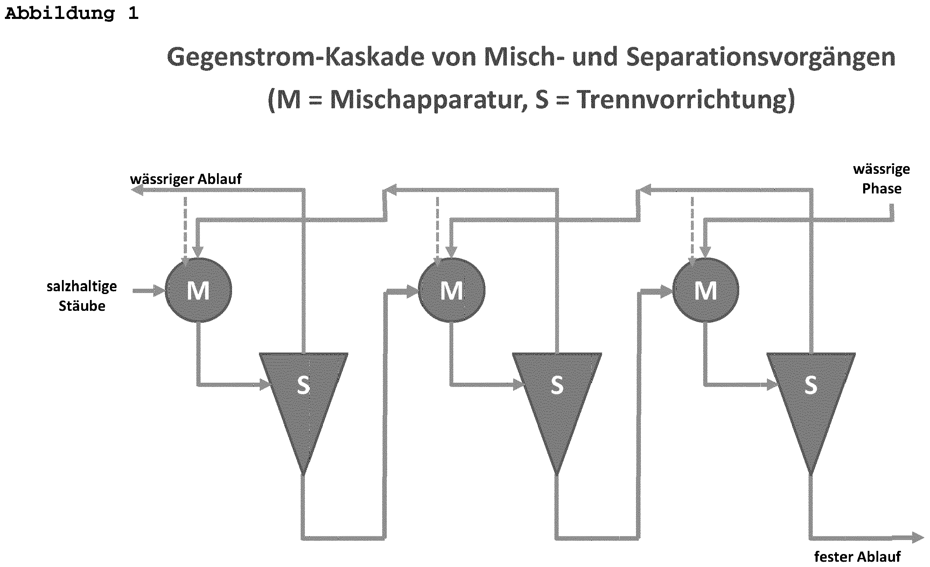

Abbildung 1 zeigt schematisch eine dreistufige Ausgestaltung der mehrstufigen Anordnung, die für das In-Kontakt-Bringen der salzhaltigen Stäube mit einer wässrigen Phase in Schritt a) des erfindungsgemäßen Verfahrens genutzt wird. Die Ausgestaltung umfasst drei Mischapparaturen und drei Trennvorrichtungen. Die salzhaltigen Stäube werden der Mischapparatur der ersten Stufe zugeführt, und die wässrige Phase wird der Mischapparatur der dritten Stufe zugeführt. Der feste Ablauf der Trennvorrichtung der dritten Stufe stellt die behandelten Stäube dar, und der wässrige Ablauf der Trennvorrichtung der ersten Stufe wird Schritt b) des Verfahrens zugeführt.

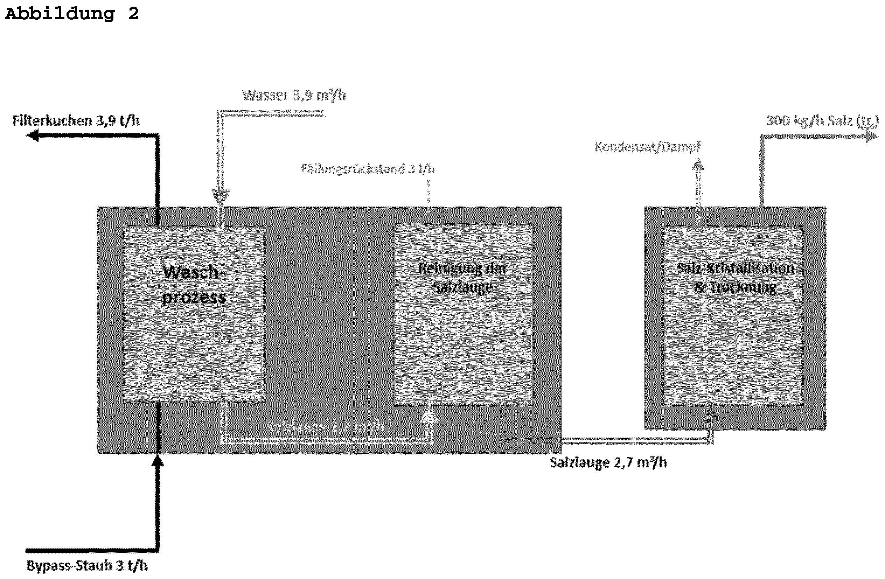

Abbildung 2 zeigt eine beispielhafte Darstellung des erfindungsgemäßen Verfahrens:
"Waschprozess" - Schritt a)
"Reinigung der Salzlauge" - Schritt b)
"Salz-Kristallisation & Trocknung" - Schritt c)

### Zusammenfassung der Erfindung

Die formulierten Aufgaben werden durch das erfindungsgemäße Verfahren gemäß (1)-(26) gelöst:
1. Verfahren zur Behandlung von salzhaltigen Stäuben, wobei das Verfahren die folgenden Schritte umfasst:
   a) Bildung einer wässrigen Lösung durch In-Kontakt-Bringen von salzhaltigen Stäuben mit einer wässrigen Phase;
   b) Entfernung von Schwermetallen aus der wässrigen Lösung; und
   c) Abtrennung von Alkalimetallchloriden aus der wässrigen Lösung,
   und das In-Kontakt-Bringen von salzhaltigen Stäuben mit einer wässrigen Phase in Schritt a) mittels einer mehrstufigen Anordnung, die von den salzhaltigen Stäuben und der wässrigen Phase in entgegengesetzter Richtung durchlaufen wird, erreicht wird.
2. Verfahren gemäß Punkt 1, wobei für Schritt a) eine mehrstufige Gegenstromkaskade eingesetzt wird, die in jeder Stufe eine Mischapparatur, sowie eine vom Ablauf der Mischapparatur gespeiste Trennvorrichtung umfasst.
3. Verfahren gemäß Punkt 2, wobei Bandfilter, Zentrifugen oder Filterpressen als Trennvorrichtung eingesetzt werden.
4. Verfahren gemäß Punkt 3, wobei für Schritt a) eine mehrstufige Gegenstromkaskade von Zentrifugen, bevorzugt Dekanterzentrifugen, eingesetzt wird, und wobei
   die salzhaltigen Stäube, sowie der wässrige Ablauf der der letzten Stufe zugehörigen Zentrifuge der der ersten Stufe zugehörigen Mischapparatur zugeführt werden,
   der der letzten Stufe zugehörigen Mischapparatur Wasser als wässrige Phase zugeführt wird,
   mit Ausnahme der letzten Stufe, der feste Ablauf einer Zentrifuge jeweils der der nächsten Stufe zugehörigen Mischapparatur zugeführt wird,
   mit Ausnahme der ersten Stufe, der wässrige Ablauf einer Zentrifuge jeweils der der vorhergehenden Stufe zugehörigen Mischapparatur zugeführt wird, sowie
   der wässrige Ablauf der der ersten Stufe zugehörigen Zentrifuge als Ausgangsmaterial für Schritt b) dient.
5. Verfahren gemäß einem der Punkte 2 bis 4, wobei es sich bei der Mischapparatur um einen Rührbehälter handelt.
6. Verfahren gemäß einem der Punkte 2 bis 5, wobei die mehrstufige Anordnung in Schritt a) 2 bis 5 Stufen, vorzugsweise 3 oder 4 Stufen, umfasst.
7. Verfahren gemäß einem der Punkte 2 bis 6, wobei das Verhältnis des eingesetzten Volumens an wässriger Phase zur eingesetzten Masse an salzhaltigem Staub in Schritt a) im Bereich von 0.8 L/kg bis 2 L/kg, vorzugsweise von 1.0 L/kg bis 1.5 L/kg, und besonders bevorzugt von 1.2 L/kg bis 1.4 L/kg liegt.
8. Verfahren gemäß einem der Punkte 1 bis 7, bei dem die Schwermetalle in Schritt b) durch Extraktion oder Abscheidung aus der wässrigen Lösung entfernt werden.
9. Verfahren gemäß Punkt 8, wobei Elektrokoagulation zur Abscheidung der Schwermetalle verwendet wird.
10. Verfahren gemäß Punkt 9, wobei die Apparatur zur Elektrokoagulation eine Fe- und/oder Al-Elektrode umfasst.
11. Verfahren gemäß Punkt 9 oder 10, wobei gebildetes Flokkulat mittels Filtration oder durch Zentrifugation abgetrennt wird.
12. Verfahren gemäß einem der Punkte 1 bis 11, wobei die Alkalimetallchloride in Schritt c) durch fraktionierte Kristallisation abgetrennt werden.
13. Verfahren gemäß einem der Punkte 1 bis 12, bei dem es sich bei den Alkalimetallchloriden mindestens um eines, ausgewählt aus der Gruppe umfassend Natriumchlorid (NaCl) und Kaliumchlorid (KCl), handelt.
14. Verfahren gemäß Punkt 12 oder Punkt 13, bei dem während und/oder nach dem Schritt c) die kristallinen Alkalimetallchloride mechanisch abgetrennt werden.
15. Verfahren gemäß einem der Punkte 12 bis 14, bei dem die abgetrennten kristallinen Alkalimetallchloride getrocknet werden.
16. Verfahren gemäß Punkt 15, bei dem die getrockneten kristallinen Alkalimetallchloride gemahlen werden.
17. Verfahren gemäß einem der Punkte 1 bis 16, bei dem die wässrige Phase wenigstens eine Hilfssubstanz enthält, die aus anorganischen Substanzen, vorzugsweise Ammoniumpolysulfid und Chloride, Nitrate, Sulfide und Sulfate der Alkali- und Erdalkalimetalle, und organischen Substanzen, vorzugsweise Salze chelatbildender Säuren, wie EDTA, ausgewählt ist.
18. Verfahren gemäß einem der Punkte 12 bis 17, bei dem die fraktionierte Kristallisation das Eindampfen der wässrigen Lösung umfasst.
19. Verfahren gemäß Punkt 18, bei dem die wässrige Lösung bei der fraktionierten Kristallisation auf ca. 70% des Volumens vor dem Schritt c), vorzugsweise auf ca. 50% des Volumens vor dem Schritt c), besonders bevorzugt auf ca. 30% des Volumens vor dem Schritt c) eingedampft wird.
20. Verfahren gemäß einem der Punkte 1 bis 19, bei dem es sich bei den Schwermetallen mindestens um eines, ausgewählt aus der Gruppe umfassend As, Be, Cd, Co, Cr, Cu, Hg, Mn, Ni, Pb, Sb, Sn, Te, Tl und V, handelt.
21. Verfahren gemäß einem der Punkte 4 bis 20, wobei es sich bei dem in der letzten Stufe zugeführten Wasser um Frischwasser, Salzwasser oder Brauchwasser handelt.
22. Verfahren gemäß einem der Punkte 18 bis 21, wobei das verdampfte Wasser zumindest zum Teil in das Verfahren zurückgeführt wird, und vorzugsweise der letzten Stufe der mehrstufigen Anordnung zugeführt wird.
23. Verfahren gemäß einem der Punkte 4 bis 22, wobei ein Teil des wässrigen Ablaufes einer Zentrifuge an die derselben Stufe zugehörige Mischapparatur zurückgeführt wird.
24. Verfahren gemäß einem der Punkte 1 bis 23, wobei in der ersten Stufe der mehrstufigen Anordnung ein Additiv zur Ausfällung von Sulfationen zugegeben wird.
25. Verfahren gemäß Punkt 24, wobei als Additiv Calciumchlorid oder Wasserstoffchlorid verwendet wird.
26. Verfahren gemäß Punkt 25, wobei das Wasserstoffchlorid in gasförmiger Form oder in Form einer wässrigen Salzsäurelösung eingesetzt wird.

Das Verfahren erlaubt eine effiziente Entfernung und Rückgewinnung von Salzen, insbesondere Natriumchlorid (NaCl) und Kaliumchlorid (KCl), aus salzhaltigen Stäuben. Zugleich wird der Schwermetallgehalt der Stäube reduziert, wodurch neue Einsatzmöglichkeiten für die Stäube erschlossen werden können. Somit ermöglicht das Verfahren die Erschließung mehrerer marktfähiger Wertstoffe aus Materialien, dass anderenfalls aufwendig entsorgt werden müssten.

### Beschreibung der Erfindung

Das erfindungsgemäße Verfahren zur Behandlung von salzhaltigen Stäuben umfasst mehrere Schritte. In Schritt a) wird eine wässrige Lösung durch In-Kontakt-Bringen von salzhaltigen Stäuben mit einer wässrigen Phase gebildet. Dabei wird das In-Kontakt-Bringen von salzhaltigen Stäuben mit einer wässrigen Phase mittels einer mehrstufigen Anordnung, die von den salzhaltigen Stäuben und der wässrigen Phase in entgegengesetzter Richtung durchlaufen wird, erreicht.

In Schritt b) werden Schwermetallen aus der wässrigen Lösung entfernt. Und in Schritt c) werden Alkalimetallchloride aus der wässrigen Lösung abgetrennt.

Das erfindungsgemäße Verfahren zur Behandlung von salzhaltigen Stäuben eignet sich grundsätzlich zur Anwendung in allen Anlagen und Situationen in denen Stäube, die wasserlösliche Salze enthalten, anfallen, z.B. in Müllverbrennungsanlagen oder beim Betrieb von Drehrohröfen.

Aus Gründen der Energieeffizienz ist es allerdings bevorzugt, das erfindungsgemäße Verfahren in Industrieanlagen einzusetzen in denen die Abgas- und/oder Abfallströme überschüssige Wärme mit sich führen, z.B. Anlagen zur Zementherstellung, Ziegelherstellung oder Klinkerherstellung anzuwenden.

### Schritt a)

In dem erfindungsgemäßen Verfahren werden die salzhaltigen Stäube im Schritt a) in Kontakt mit einer wässrigen Phase gebracht. Dies geschieht mittels einer mehrstufigen Anordnung, die von den salzhaltigen Stäuben und der wässrigen Phase in entgegengesetzter Richtung durchlaufen wird.

Dies kann z.B. dadurch erreicht werden, dass in jeder Stufe der mehrstufigen Anordnung eine Mischapparatur zum Vermischen einer festen und einen wässrigen Phase, sowie eine vom Ablauf der Mischapparatur gespeiste Trennvorrichtung zur Trennung in eine feste und eine wässrige Phase eingesetzt werden (siehe Abbildung 1).

Bei der Mischapparatur kann es sich zum Beispiel um einen Rührbehälter handeln.

Bei der Trennvorrichtung kann es sich zum Beispiel um einen Bandfilter, eine Zentrifuge oder eine Filterpresse handeln. Vorzugsweise werden hierbei Zentrifugen, und besonders bevorzugt Dekanterzentrifugen eingesetzt. Die Verwendung von Zentrifugen bietet gegenüber dem Einsatz von Filtern den Vorteil, dass dabei ein mögliches Anbacken von Material am Filter und anderen Teilen der Anlage aufgrund von Ausfällungen und Spritzern nicht auftritt. Dadurch erhöht sich das Wartungsintervall der Anlage.

Bei der im Schritt a) verwendeten wässrigen Phase kann es sich zu Beispiel um Frischwasser, Salzwasser oder Brauchwasser handeln. Insbesondere kann es sich um demineralisiertes Wasser, Leitungswasser, Trinkwasser oder Brauchwasser (d.h. Wasser, das keine Trinkwasserqualität aufweist) handeln. Die Verwendung von Brauchwasser ist dabei ökonomisch vorteilhaft. Um den Wasserverbrauch des Verfahrens zu reduzieren, kann in Schritt c) anfallender Wasserdampf mittels einer Abzugsvorrichtung aufgefangen, kondensiert und als wässrige Phase verwendet werden. Wenn wasserlösliche Bestandteile der wässrigen Lösung in Schritt c) teilweise oder vollständig mittels fraktionierter Kristallisation abgetrennt werden, kann die dabei gewonnene Mutterlauge ebenfalls als wässrige Phase verwendet werden. Bei einer solchen Verfahrensweise wird bevorzugt, dass die Temperatur während der fraktionierten Kristallisation geringer ist als die Temperatur während des Schritts a), so dass eine effiziente Auflösung wasserlöslicher Bestandteile in der wässrigen Phase gewährleistet werden kann.

Des Weiteren kann die wässrige Phase eine oder mehrere Hilfssubstanzen enthalten, um die Behandlung der salzhaltigen Stäube zu begünstigen, und um die Reinigungswirkung bzw. die Aufnahme von flüchtigen Bestandteilen zu unterstützen. In diesem Zusammenhang ist es z.B. möglich, der wässrigen Phase eine oder mehrere Hilfssubstanzen zuzusetzen, die aus anorganischen Substanzen (vorzugsweise Chloriden, Nitraten, Sulfiden und Sulfaten der Alkali- und Erdalkalimetalle als auch Ammoniumpolysulfid) und organischen Substanzen (vorzugsweise Salzen chelatbildender Säuren, wie Na₂-EDTA) ausgewählt werden. Hierbei umfassen die organischen und anorganischen Substanzen auch Säuren, wie z.B. Mineralsäuren (z.B. HCl, H₂SO₄, H₃PO₄ usw.) und/oder organische Säuren (z.B. Ameisensäure, Essigsäure), und Basen, wie z.B. anorganische Basen (z.B. NaOH, KOH, LiOH, Ca(OH)₂) und/oder organische Basen (z.B. stickstoffhaltige organische Basen, wie z.B. Triethylamin und Pyridin).

Zum Beispiel kann der wässrigen Phase Calciumchlorid oder Wasserstoffchlorid (in gasförmiger Form oder in Form einer wässrigen Salzsäurelösung) als Additiv zur Ausfällung von Sulfationen zugegeben werden. Dadurch kann die Reinheit von in Schritt c) erhaltenem Kaliumchlorid erhöht werden.

Die Zugabe organischer Salze oder Säuren zu der wässrigen Phase kann eine löslichkeitsverbessernde Wirkung auf Metalle ausüben, da diese dann in Lösung komplexiert werden und somit den salzhaltigen Stäuben entzogen werden. Dies ist zur Reduzierung der Schwermetallbelastung günstig, sowohl für den Fall, dass die behandelten Stäube entsorgt werden, als auch für den Fall, dass sie weiterverwertet werden. In letzterem Fall kann die Belastung des Endproduktes mit Metallen reduziert werden.

Wenn der wässrigen Phase organische oder anorganische Hilfssubstanzen zugesetzt werden, beträgt die Konzentration dieser organischen und/oder anorganischen Substanzen in der wässrigen Phase vorzugsweise 0,01 - 10 Gew.-%, stärker bevorzugt 0,1 - 5 Gew.-%, und am stärksten bevorzugt 0,5 - 3 Gew.-%. Für eine möglichst ökonomische Prozessführung ist die Verwendung von Wasser (Leitungs- bzw. Brauchwasser) als wässrige Phase bevorzugt, wohingegen die Verwendung einer wässrigen Phase, die eine oder mehrere der o.g. Hilfssubstanzen enthält, aus den o.g. genannten Gründen für eine bessere Auswaschung löslicher Substanzen oder zur Entfernung unerwünschter Stoffe bevorzugt sein kann. Die Hilfssubstanzen können der wässrigen Phase vor dem In-Kontakt-Bringen mit den salzhaltigen Stäuben zugegeben oder in einer der Stufen der mehrstufigen Anordnung eindosiert werden.

Bei entsprechenden Hilfssubstanzen kann es sich beispielsweise um anorganische Substanzen, insbesondere Salze wie Chloride, Nitrate, Sulfide oder Sulfate der Alkali- und Erdalkalimetalle oder auch Ammoniumpolysulfid handeln. Die wässrige Phase kann auch organische Substanzen, wie beispielsweise chelatbildende Säuren wie EDTA enthalten. Die letzteren erhöhen die Löslichkeit der Schwermetallionen in der wässrigen Lösung und begünstigen somit deren Entfernung aus den salzhaltigen Stäuben.

In einer bevorzugten Ausführungsform des Verfahrens wird für Schritt a) eine mehrstufige Gegenstromkaskade von Zentrifugen, bevorzugt Dekanterzentrifugen, eingesetzt, wobei
die salzhaltigen Stäube, sowie der wässrige Ablauf der der letzten Stufe zugehörigen Zentrifuge der der ersten Stufe zugehörigen Mischapparatur zugeführt werden,
der der letzten Stufe zugehörigen Mischapparatur Wasser als wässrige Phase zugeführt wird,
mit Ausnahme der letzten Stufe, der feste Ablauf einer Zentrifuge jeweils der der nächsten Stufe zugehörigen Mischapparatur zugeführt wird,
mit Ausnahme der ersten Stufe, der wässrige Ablauf einer Zentrifuge jeweils der der vorhergehenden Stufe zugehörigen Mischapparatur zugeführt wird, sowie
der wässrige Ablauf der der ersten Stufe zugehörigen Zentrifuge als Ausgangsmaterial für Schritt b) dient.

Die in Schritt a) gewonnene wässrige Lösung, enthält die löslichen Bestandteile der salzhaltigen Stäube in gelöster Form und wird dem nachstehend beschriebenen Schritt b) zur Weiterbehandlung zugeführt.

Die wasserunlöslichen Bestandteile bilden den festen Ablauf der mehrstufigen Anordnung. Diese behandelten, salzarmen Stäube, können der weiteren Verwertung, zugeführt werden. Zum Beispiel können sie in den Herstellungsprozess, der den zu behandelnden salzhaltigen Staub ursprünglich generiert hat, zurückgeführt werden.

Vom Standpunkt der Minimierung der benötigten Wassermenge bei gleichzeitiger Maximierung der Menge an Salzen, die den salzhaltigen Stäuben entzogen wird, umfasst die in Schritt a) verwendete mehrstufige Anordnung bevorzugt 2 bis 5 Stufen, insbesondre bevorzugt 3 oder 4 Stufen. Ferner kann hierzu ein Teil der in einer Stufe abgetrennten wässrigen Phase dem Zulauf derselben Stufe zugeführt werden; z.B. kann ein Teil des wässrigen Ablaufes einer Zentrifuge an die derselben Stufe zugehörige Mischapparatur zurückgeführt werden. Je mehr Stufen eingesetzt werden, desto weniger Wasser wird für eine gegebene Waschleistung benötigt.

Ferner liegt das Verhältnis des eingesetzten Volumens an wässriger Phase zur eingesetzten Masse an salzhaltigem Staub in Schritt a) vom Standpunkt der der Minimierung der benötigten Wassermenge bei gleichzeitiger Maximierung der Menge an Salzen im Bereich von 0.8 L/kg bis 2 L/kg, vorzugsweise von 1.0 L/kg bis 1.5 L/kg, und besonders bevorzugt von 1.2 L/kg bis 1.4 L/kg.

Der Einsatz einer größeren Menge an wässriger Phase relativ zur eingesetzten Masse an salzhaltigem Staub ermöglicht es, mehr Salz zu lösen, jedoch erhöht sich dadurch potentiell auch die Menge an Wasser, die in Schritt c) verdampft werden muss.

In der vorliegenden Anmeldung bezieht sich der Begriff *"wasserlösliche Bestandteile"* auf anorganische oder organische Substanzen, welche im Schritt a) in der wässrigen Phase gelöst werden und somit Bestandteile der wässrigen Lösung werden. Die *"wasserunlöslichen Bestandteile"* sind hingegen amorphe oder kristalline Feststoffe, welche bei der Durchführung von Schritt a) nicht in Lösung gehen und von der wässrigen Lösung durch Filtration oder Zentrifugieren abgetrennt werden können. Bei wasserlöslichen Bestandteilen und wasserunlöslichen Bestandteilen kann es sich beispielsweise um Bestandteile der salzhaltigen Stäube handeln. Allerdings können die wasserlöslichen Bestandteile und die wasserunlöslichen Bestandteile auch chemische Reaktionsprodukte der salzhaltigen Stäube mit der wässrigen Phase enthalten.

Dadurch, dass die salzhaltigen Stäube in Kontakt mit der wässrigen Phase gebracht werden, lösen sich die wasserlöslichen Bestandteile in der wässrigen Phase. Die wasserunlöslichen Bestandteile werden vorzugsweise abgetrennt, z.B. durch Filtration oder durch Zentrifugieren. Die hierbei abgetrennten wasserunlöslichen Bestandteile (z.B. der erhaltene Filterkuchen) weisen eine maßgeblich verringerte Konzentration an Alkali- und Erdalkalisalzen (Chloride, Sulfate etc.) als auch an Schwermetallen (z.B. As, Be, Cd, Co, Cr, Cu, Hg, Mn, Ni, Pb, Sb, Sn, Te, Tl, V) auf. Somit können, falls gewünscht, die abgetrennten wasserunlöslichen Bestandteile (z.B. der Filterkuchen im Fall einer Filtration) gegebenenfalls in das in der Industrieanlage durchgeführte Verfahren, welches den zu behandelnden salzhaltigen Staub ursprünglich generiert hat, z. B. ein Zement- bzw. Klinkerherstellungsprozess, zurückgeführt werden, ohne dass dies zur Anreicherung des Produkts der Industrieanlage mit diesen unerwünschten Substanzen führt. Die abgetrennten wasserunlöslichen Bestandteile können auch einer intensiveren Reinigung unterzogen werden, z.B. durch Extraktion, um den Gehalt an unerwünschten Bestandteilen weiter zu reduzieren. In kleinem Maßstab kann solch eine Extraktion z.B. durch Soxleth-Extraktion durchgeführt werden. Großtechnisch lässt sich solch eine Extraktion z.B. mit einem mixer-settler (Mischabsetzer) durchführen.

Die wasserlöslichen Bestandteile, die sich im Schritt a) in der wässrigen Phase lösen, setzen sich im Wesentlichen aus Chloriden und anderen flüchtigen Bestandteilen, wie Sulfaten (bzw. SO₃) zusammen, können aber auch andere Bestandteile, wie Schwermetalle oder Nitrate enthalten.

Die wasserunlöslichen Bestandteile, sprich die behandelten Stäube weisen einen wesentlich reduzierten Chloridgehalt auf.

Abhängig von dem Verhältnis des eingesetzten Volumens an wässriger Phase zur eingesetzten Masse an salzhaltigem Staub lässt sich der Chloridanteil der wasserunlöslichen Bestandteile nach dem In-Kontakt-Bringen mit der wässrigen Phase im Schritt a) und ihrer Abtrennung auf weniger als 20 Gew.-%, bevorzugt weniger als 10 Gew.-%, stärker bevorzugt weniger als 5 Gew.-%, und am stärksten bevorzugt weniger als 2 Gew.-% des Chloridanteils der Stäube vor dem Einleiten durch die wässrige Phase (Gew.-%), d.h. des Chloridanteils der Ausgangsmaterialien, reduzieren. Angesichts dessen eignet sich der behandelte, salzarme Staub, bei Rückführung in einen industriellen Prozess zur Senkung des Chloridanteils der Prozessströme.

Die im vorhergehenden beschriebene mehrstufige Fest-Flüssigtrennung bietet den Vorteil, dass sie eine hohe Waschleistung bei geringen Wassereinsatz erreicht.

### Schritt b)

In dem erfindungsgemäßen Verfahren werden in Schritt b) Schwermetalle aus der in Schritt a) erhaltenen wässrige Lösung entfernt. Die Durchführung dieses Schrittes vor der Rückgewinnung von in den salzhaltigen Stäube enthaltenen und beim In-Kontakt-Bringen mit den salzhaltigen Stäube in der wässrigen Phase gelösten Alkali- und Erdalkalimetallsalzen, erlaubt es, den Gehalt an Schwermetallen bzw. derer Salze in den nach Schritt c) erhaltenen Produkten möglichst gering zu halten.

Schwermetalle können zum Beispiel durch die Zugabe von Sulfiden, Polysulfiden oder anderen Anionen schwer löslicher Schwermetallsalze zu der in Schritt a) erhaltenen wässrigen Lösung ausgefällt werden. So ist es möglich, Metalle wie As, Be, Br, Cd, Cr, Hg, Ni, Pb, Tl, V und Zn als schwerlösliche Salze (z.B. als Sulfide) abzutrennen. Die genannten Anionen werden vorzugsweise in Form von Natriumverbindungen, z.B. Na₂S in die wässrige Lösung eingebracht. Eine weitere bevorzugte Variante ist die Einleitung von gasförmigem H₂S in die wässrige Lösung.

Die ausgefällten Schwermetallsalze können durch Verfahren, die dem Fachmann bekannt sind, z.B. durch Filtration oder Zentrifugieren, von der wässrigen Lösung abgetrennt und danach getrocknet werden.

Ferner können die Schwermetalle mittels geeigneter Ionentauscher-Harze von der wässrigen Lösung abgetrennt und wiedergewonnen werden. Die hierfür geeigneten Ionentauscher-Harze sind dem Fachmann bekannt und umfassen unter anderem Harze mit Carboxylgruppen oder Sulfonsäuregruppen. Entsprechende Ionentauscher-Harze sind beispielsweise unter Handelsnamen Lewatit^{®} (Lanxess), Dowex^{®} (Dow Chemicals) und Amberlite^{®} (Rohm and Haas) kommerziell erhältlich.

Als am effektivsten für die Abscheidung der Schwermetalle hat sich jedoch ein Verfahren mittels Elektrokoagulation erwiesen.

Das Verfahren der Elektrokoagulation ist dem die dem Fachmann bekannt und ist z.B. in der WO 2016/189374 A1 beschrieben. Dabei wird ein Elektrodenpaar in die Lösung eingeführt und durch Anlegen einer Spannung die oxidative Zersetzung der Anode. Die aus der Anode hervorgehenden Kationen gehen eine Redoxreaktion mit gelösten Schwermetallionen ein, welche zur Bildung eines die Schwermetalle enthaltenden Flokkulats führt.

Nach der Ausflockung der Schwermetalle können diese durch Verfahren, die dem Fachmann bekannt sind, z.B. durch Filtration oder Zentrifugieren, von der wässrigen Lösung abgetrennt und danach getrocknet werden.

Aufgrund seines hohen Salzgehaltes weist die in Schritt a) erhaltene wässrige Lösung eine hohe elektrische Leitfähigkeit auf, weshalb sich das Verfahren der Elektrokoagulation besonders gut zur Entfernung der Schwermetallionen daraus eignet.

Vorzugsweise wird für die Elektrokoagulation eine Eisenund/oder eine Aluminium-Elektrode eingesetzt.

Falls die salzhaltigen Stäube nennenswerte Mengen an Quecksilber enthalten, kann dieses auch bereits vor Schritt a) abgetrennt werden, indem die Stäube erhitzt werden, um das Quecksilber in den gasförmigen Zustand zu überführen und das gasförmige Quecksilber dann mittels eines Sulfids, z.B. Natriumsulfid, gebunden wird. Ein solches Verfahren ist dem Fachmann bekannt und erlaubt ebenfalls die (selektive) Abtrennung anderer leicht flüchtiger Schwermetalle.

### Schritt c)

In dem erfindungsgemäßen Verfahren werden im Schritt c) Alkalimetallchloride aus der wässrigen Lösung abgetrennt.

Vorzugsweise erfolgt die Abtrennung durch fraktionierte Kristallisation. Dabei wird die wässrige Lösung auf ca. 70% des Volumens vor dem Schritt c), vorzugsweise auf ca. 50% des Volumens vor dem Schritt c), besonders bevorzugt auf ca. 30% des Volumens vor dem Schritt c) eingedampft. Die so erhaltene konzentrierte wässrige Lösung kann anschließend abgekühlt werden, so dass es zu einer fraktionierten Kristallisation der Alkalimetallchloride kommt. Die Alkalimetallchloride kristallisieren nacheinander aus, so dass sie eine besonders hohe Reinheit aufweisen und somit wirtschaftlich wertvoller und vielfältiger einsetzbar sind. Die auskristallisierten Alkalimetallchloride können durch Verfahren, die dem Fachmann bekannt sind, z.B. durch Filtrieren, von der wässrigen Lösung abgetrennt und danach getrocknet werden.

Das erfindungsgemäße Verfahren erlaubt somit die Gewinnung von hochreinen Alkalimetallchloriden aus salzhaltigen Stäuben, die z.B. beim Betrieb von Drehrohröfen, insbesondere in Zement-, Klinker- und Ziegelherstellungsprozessen anfallen.

Bei den nach dem erfindungsgemäßen Verfahren erhaltenen Alkalimetallchloriden, handelt es sich vorranging um Natriumchlorid und Kaliumchlorid. Aufgrund der Tatsache, dass sie durch fraktionierte Kristallisation gewonnen werden, weisen sie einen hohen Reinheitsgrad auf und können somit diversen Verwendungen zugeführt werden. Solche Verwendungen umfassen die Verwendung als Streusalz, Leckstein, Dünger, Rohstoff für Elektrolysen zur Chlor- und/oder Alkalihydroxidgewinnung, Flammschutz, Staubbinder, als Düngerkomponente oder zur Glas- bzw. Keramikherstellung.

In Schritt c) anfallender Wasserdampf kann mittels einer Abzugsvorrichtung aufgefangen, kondensiert und als wässrige Phase in Schritt a) verwendet werden. Dies gilt ebenfalls für die nach Kristallisation der Alkalimetallchloride verbleibende wässrige Phase.

Falls nicht anders angegeben, beziehen sich sämtliche Prozentangaben in der vorliegenden Anmeldung auf Gewichtsprozent.

### Beispiele

### Beispiel 1:

Die folgende Tabelle zeigt die Analyseergebnisse eines Staubes vor ("Bypassstaub") und nach ("Filterkuchen") Durchlaufen des erfindungsgemäßen Verfahrens. Wie aus den daten ersichtlich ist, weist der behandelte Staub einen merklich reduzierten Salzgehalt auf.

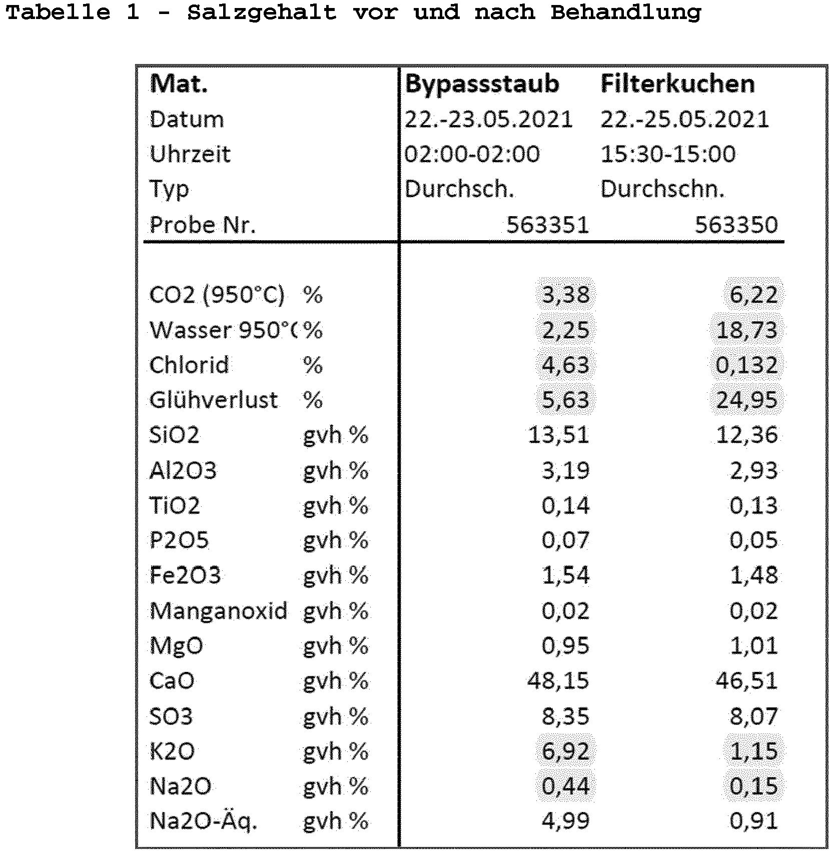

### Beispiel 2

Die folgende Grafik zeigt den Wassergehalt einer nach Schritt a) des erfindungsgemäßen Verfahrens erhaltenen wässrigen Lösung bei Verwendung verschiedener Anzahlen von Trennstufen.

Wie zu erkennen ist, nimmt die Salzkonzentration der erhaltenen wässrigen Lösung mit steigender Anzahl der Trennstufen zu.

### Wassergehalt vs. Anzahl der Trennstufen

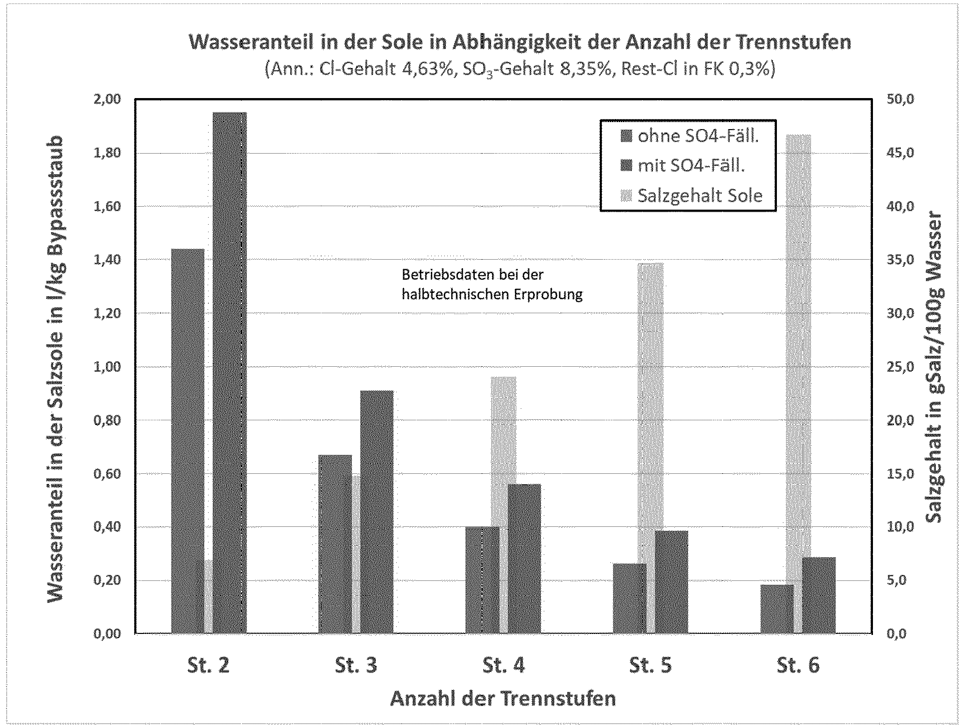

### Beispiel 3

Die folgende Tabelle zeigt die Ergebnisse eines Versuches zur Nutzung von Elektrokoagulation, um Schwermetalle aus der in Schritt a) erhaltenen wässrigen Lösung zu entfernen. Hierbei handelt es sich um die Analysen zweier Durchschnittsproben, die aus jeweils 11 Einzelproben gemischt wurden.

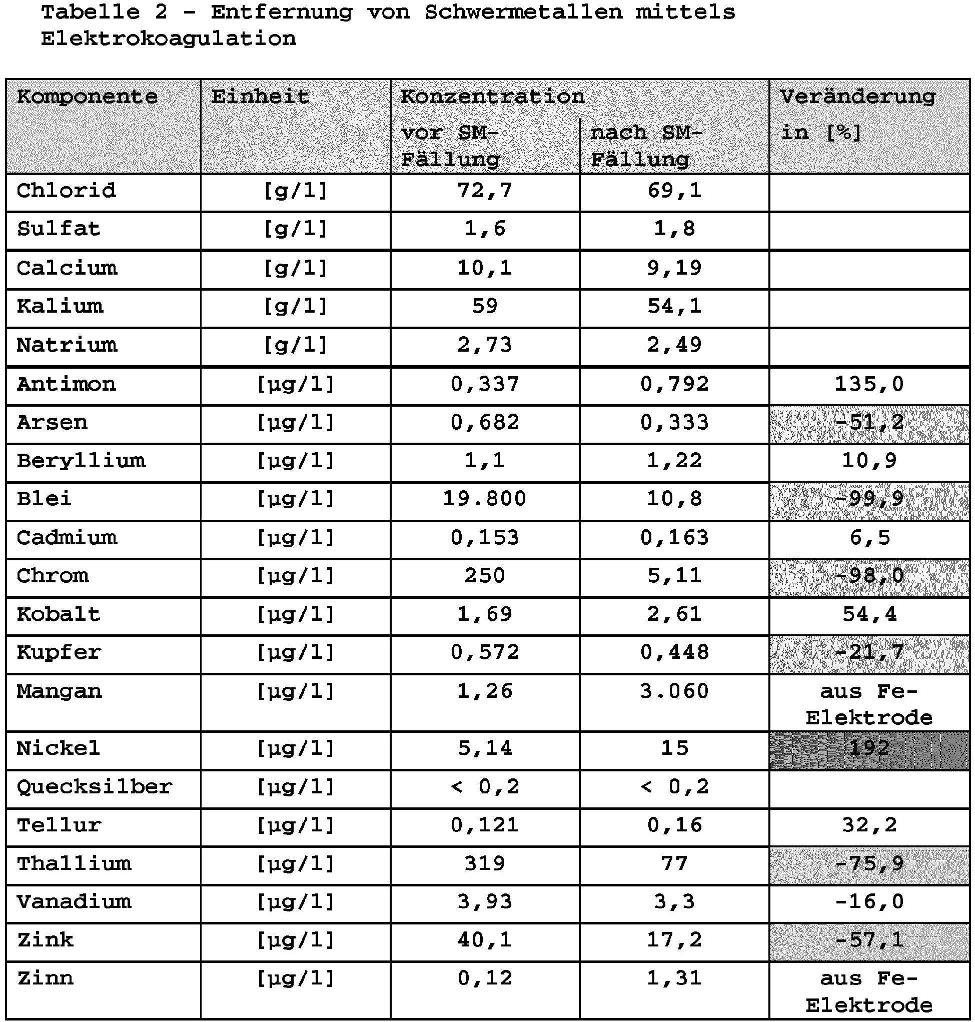

Wie aus den Daten ersichtlich ist, wurden insbesondere die Elemente Blei und Chrom fast vollständig gefällt. Ebenso wurde die Thallium-Konzentration deutlich reduziert.

Für eine Reihe weiterer Komponenten, von denen jedoch auch in der Ausgangslauge nur relativ geringe und daher unkritische Gehalte gemessen wurden, ergab sich ein uneinheitliches Bild. Dies ist zum Teil auch dadurch bedingt, dass die Einzelproben vor und nach Sulfatfällung zeitgleich gezogen wurden, obwohl das Volumen von Neutralisationsbehälter, Reaktor und Flotation einer Verweilzeit von mehreren Stunden entsprach. Daher spiegeln die vor und nach Schwermetallfällung gezogenen Proben nicht exakt den gleichen Betriebszustand der Versuchsanlage wider, woraus eine gewisse Unschärfe bei dem Vergleich dieser Daten resultiert. Auch führen die nur sehr kleinen Absolutwerte in der prozentualen Bewertung zu sehr großen Zahlen, obwohl die Abweichungen zwischen den gemessenen Werten tatsächlich im Bereich der Analysenunschärfe liegen.

Insbesondere bei Mangan, und wohl auch bei Zinn, ist die beobachtete Zunahme beim Durchlaufen der Anlage darauf zurückzuführen, dass die Eisen-Elektroden (Fe-Elektroden) des Koagulationsreaktors mit ca. 1 % Mangan und geringen Zinn-Anteilen legiert waren, die sich auch in der Reinlösung wiederfinden. Eine solche Zufuhr an diesen Elementen lässt sich durch Ausweichen auf niedriger legiertes Anodenmaterial vermeiden.

## Patentansprüche

1. Verfahren zur Behandlung von salzhaltigen Stäuben, wobei das Verfahren die folgenden Schritte umfasst:
a) Bildung einer wässrigen Lösung durch In-Kontakt-Bringen von salzhaltigen Stäuben mit einer wässrigen Phase;
b) Entfernung von Schwermetallen aus der wässrigen Lösung; und
c) Abtrennung von Alkalimetallchloriden aus der wässrigen Lösung,
und das In-Kontakt-Bringen von salzhaltigen Stäuben mit einer wässrigen Phase in Schritt a) mittels einer mehrstufigen Anordnung, die von den salzhaltigen Stäuben und der wässrigen Phase in entgegengesetzter Richtung durchlaufen wird, erreicht wird.

2. Verfahren gemäß Anspruch 1, wobei für Schritt a) eine mehrstufige Gegenstromkaskade eingesetzt wird, die in jeder Stufe eine Mischapparatur, sowie eine vom Ablauf der Mischapparatur gespeiste Trennvorrichtung umfasst.

3. Verfahren gemäß Anspruch 2, wobei Bandfilter, Zentrifugen oder Filterpressen als Trennvorrichtung eingesetzt werden.

4. Verfahren gemäß Anspruch 3, wobei für Schritt a) eine mehrstufige Gegenstromkaskade von Zentrifugen, bevorzugt Dekanterzentrifugen, eingesetzt wird, und wobei
die salzhaltigen Stäube, sowie der wässrige Ablauf der der letzten Stufe zugehörigen Zentrifuge der der ersten Stufe zugehörigen Mischapparatur zugeführt werden,
der der letzten Stufe zugehörigen Mischapparatur Wasser als wässrige Phase zugeführt wird,
mit Ausnahme der letzten Stufe, der feste Ablauf einer Zentrifuge jeweils der der nächsten Stufe zugehörigen Mischapparatur zugeführt wird,
mit Ausnahme der ersten Stufe, der wässrige Ablauf einer Zentrifuge jeweils der der vorhergehenden Stufe zugehörigen Mischapparatur zugeführt wird, sowie
der wässrige Ablauf der der ersten Stufe zugehörigen Zentrifuge als Ausgangsmaterial für Schritt b) dient.

5. Verfahren gemäß einem der Ansprüche 2 bis 4, wobei es sich bei der Mischapparatur um einen Rührbehälter handelt.

6. Verfahren gemäß einem der Ansprüche 2 bis 5, wobei die mehrstufige Anordnung in Schritt a) 2 bis 5 Stufen, vorzugsweise 3 oder 4 Stufen, umfasst.

7. Verfahren gemäß einem der Ansprüche 2 bis 6, wobei das Verhältnis des eingesetzten Volumens an wässriger Phase zur eingesetzten Masse an salzhaltigem Staub in Schritt a) im Bereich von 0.8 L/kg bis 2 L/kg, vorzugsweise von 1.0 L/kg bis 1.5 L/kg, und besonders bevorzugt von 1.2 L/kg bis 1.4 L/kg, liegt.

8. Verfahren gemäß einem der Ansprüche 1 bis 7, wobei Elektrokoagulation zur Entfernung der Schwermetalle verwendet wird.

9. Verfahren gemäß einem der Ansprüche 1 bis 8, wobei die Alkalimetallchloride in Schritt c) durch fraktionierte Kristallisation abgetrennt werden.

10. Verfahren gemäß einem der Ansprüche 1 bis 9, bei dem es sich bei den Alkalimetallchloriden mindestens um eines, ausgewählt aus der Gruppe umfassend Natriumchlorid (NaCl) und Kaliumchlorid (KCl), handelt.

11. Verfahren gemäß einem der Ansprüche 1 bis 10, bei dem die wässrige Phase wenigstens eine Hilfssubstanz enthält, die aus anorganischen Substanzen, vorzugsweise Ammoniumpolysulfid und Chloride, Nitrate, Sulfide und Sulfate der Alkali- und Erdalkalimetalle, und organischen Substanzen, vorzugsweise Salze chelatbildender Säuren, wie EDTA, ausgewählt ist.

12. Verfahren gemäß einem der Ansprüche 1 bis 11, bei dem die wässrige Lösung bei der fraktionierten Kristallisation auf ca. 70% des Volumens vor dem Schritt c), vorzugsweise auf ca. 50% des Volumens vor dem Schritt c), besonders bevorzugt auf ca. 30% des Volumens vor dem Schritt c) eingedampft wird.

13. Verfahren gemäß einem der Ansprüche 1 bis 12, bei dem es sich bei den Schwermetallen mindestens um eines, ausgewählt aus der Gruppe umfassend As, Be, Cd, Co, Cr, Cu, Hg, Mn, Ni, Pb, Sb, Sn, Te, Tl und V, handelt.

14. Verfahren gemäß einem der Ansprüche 4 bis 13, wobei ein Teil des wässrigen Ablaufes einer Zentrifuge an die derselben Stufe zugehörige Mischapparatur zurückgeführt wird.

15. Verfahren gemäß einem der Ansprüche 1 bis 14, wobei in der ersten Stufe der mehrstufigen Anordnung ein Additiv zur Ausfällung von Sulfationen zugegeben wird.
